(19) Europäisches Patentamt
European Patent Office
Office européen des brevets

(11) **EP 2 090 766 A2**

(12) **EUROPEAN PATENT APPLICATION**

(43) Date of publication:
**19.08.2009 Bulletin 2009/34**

(51) Int Cl.:
*F02D 35/00* (2006.01)     *F02M 63/02* (2006.01)
*G01N 11/02* (2006.01)

(21) Application number: **09151116.2**

(22) Date of filing: **22.01.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **23.01.2008 JP 2008012689**

(71) Applicant: **DENSO CORPORATION**
**Kariya-city, Aichi-pref., 448-8661 (JP)**

(72) Inventor: **Shibata, Masamichi**
**1-1, Showa-cho**
**Kariya-city Aichi 448-8661 (JP)**

(74) Representative: **TBK-Patent**
**Bavariaring 4-6**
**80336 München (DE)**

(54) **Control means for the fuel supply of an internal combustion engine**

(57)     A liquid supply system which may be designed as a fuel injection system for automotive vehicles is provided. The liquid supply system works to control operations of a liquid injector and a pump. The liquid supply system determines the viscosity of the liquid, as delivered from the pump, and corrects the operation of the injector so as to compensate for an error which will arise from a change in viscosity of the liquid, thereby ensuring the accuracy in supplying the liquid.

Fig. 1

EP 2 090 766 A2

## Description

BACKGROUND OF THE INVENTION

1 Technical Field of the Invention

The present invention relates generally to a liquid supply system such as a fuel injection control system for automotive diesel engines, and more particularly to such a liquid supply system designed to calculate the viscosity of liquid and determine a target quantity of the liquid to be supplied based on the calculated viscosity.

2 Background Art

For example, typical common rail fuel injection systems for automotive vehicles are designed to pressurize and feed fuel to a common rail through a fuel supply pump, spray the fuel in the common rail into each cylinder of a diesel engine, regulate the speed of revolution of the fuel supply pump and times when each fuel injector is to be opened and closed through an electronic control unit (ECU) to control the quantity of fuel actually sprayed into the engine and the time when the fuel is to be sprayed into the engine. Japanese Patent First Publication No. 2001-182638 teaches such a common rail fuel injection system.

The reduction in amount of harmful emissions from the diesel engine such as particulate matter (PM) contained in the exhaust gas requires accurate control the quantity of fuel to be sprayed into each cylinder of the diesel engine and the time such spraying of the fuel is to be made based on an operating condition of the engine. A change in temperature or physical property of the fuel usually results in a change in viscosity of the fuel. This will cause the quantity of fuel actually sprayed into the engine to be changed even when the time for which the fuel injector is kept opened and the time at which the fuel is sprayed into the engine are constant, thus leading to the instability in controlling the emissions from the engine.

SUMMARY OF THE INVENTION

It is therefore a principal object of the invention to avoid the disadvantages of the prior art.

It is another object of the invention to provide a liquid supply system such as a fuel injection system which is designed to ensure the accuracy in supplying a desired quantity of liquid.

According to one aspect of the invention, there is provided a liquid supply system which may be designed as a fuel injection system for automotive vehicles. The liquid supply system comprises: (a) a pressurizing/feeding mechanism working to pressurize and feed liquid; (b) an injector working to spray the liquid, as fed from the pressurizing/feeding mechanism, through a spray hole; (c) a flow path which extends from an outlet of the pressurizing/feeding mechanism and the spray hole of the injector and through which the liquid flows; and (d) a controller working to perform a control operation to control an operation of the injector. The controller also performs a first pressure-determining function, a second pressure-determining function, a flow rate-determining function, a viscosity-calculating function, and a control-correcting function. The first pressure-determining function determines a first pressure that is a pressure of the liquid flowing through a portion of the flow path. The second pressure-determining function determines a second pressure that is a pressure of the liquid flowing downstream of the portion of the flow path where the first pressure is determined. The flow rate-determining function determines a flow rate of the liquid flowing through the flow path. The viscosity-calculating function calculates a viscosity of the liquid supplied to the injector based on a difference between the first pressure and the second pressure and the flow rate, as determined by the flow rate-determining function. The control-correcting function corrects the control operation to control the operation of the injector based on the viscosity of the liquid, as calculated by the viscosity-calculating function.

Specifically, the control-correcting function places the control operation in a desired state in view of the viscosity of the liquid. In other words, the controller corrects the operation of the injector so as to compensate for an error thereof arising from a change in viscosity of the liquid.

The flow rate-determining function works to determine the viscosity of the liquid flowing through the flow path between places where the first and second pressures are determined.

The viscosity of the liquid, as referred to herein, may be expressed by a function y $(=f(\mu))$ of the degree of viscosity $(\mu)$, as defined in fluid dynamics, as well as the degree of viscosity itself.

In the preferred mode of the invention, the liquid supply system further includes a common rail working as an accumulator in which the liquid, as delivered from the pressurizing/feeding mechanism, is stored and to which the injector is connected. The first pressure is the pressure of the liquid flowing upstream of the common rail within the flow path. The second pressure is the pressure of the liquid in the common rail.

The first pressure-determining function calculates the first pressure based on an operating condition of the pressurizing/feeding mechanism. The flow rate-determining function calculates the flow rate of the liquid based on the operating condition of the pressurizing/feeding mechanism.

The liquid supply system further includes a liquid tank in which the liquid to be pressurized by the pressurizing/feeding mechanism is stored. The controller also works to determine whether the liquid tank has been refilled or not. When the liquid tank is determined to have been refilled, the control-correcting function corrects the control operation based on the viscosity of the liquid, as calculated by the viscosity-calculating function.

The controller controls the pressurizing/feeding mechanism to keep an operation of the pressurizing/feeding mechanism constant when the viscosity-calculating function calculates the viscosity of the liquid. In other words, when the pressurizing/feeding mechanism is placed in the steady state in operation, the viscosity is calculated, thereby improving the accuracy in supplying the liquid.

The controller may also control the injector to keep the operation of the injector constant when the viscosity-calculating function calculates the viscosity of the liquid.

When the pressurizing/feeding mechanism is feeding the liquid through the flow path, the viscosity-calculating function may calculate the viscosity of the liquid.

The liquid may be fuel for a diesel engine. The injector may be designed to inject the fuel into a combustion chamber of the diesel engine.

BRIEF DESCRIPTION OF THE DRAWINGS

The present invention will be understood more fully from the detailed description given hereinbelow and from the accompanying drawings of the preferred embodiments of the invention, which, however, should not be taken to limit the invention to the specific embodiments but are for the purpose of explanation and understanding only.

In the drawings:

Fig. 1 is a block diagram which illustrates a liquid supply system designed as a fuel injection system according to the invention;
Fig. 2 is a flow chart of an injection control program which calculates the viscosity of fuel to correct fuel injection control according to the first embodiment of the invention; and
Fig. 3 is a flow chart of an injection control program which calculates the viscosity of fuel to correct fuel injection control according to the second embodiment of the invention.

DESCRIPTION OF THE PREFERRED EMBODIMENTS

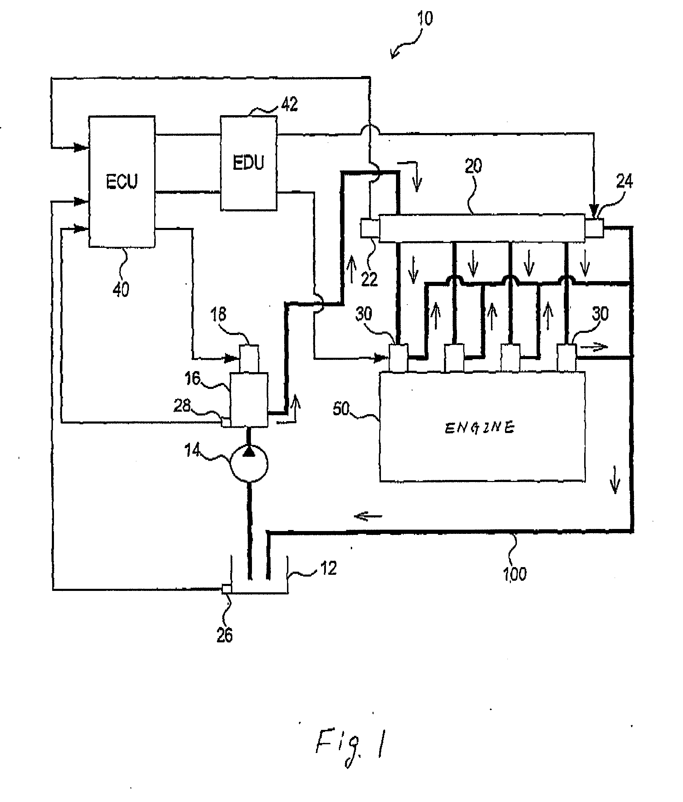

Referring to the drawings, particularly to Fig. 1, there is shown a liquid supply system according to the invention which is designed in this embodiment as an accumulator fuel injection system 10 such as an automotive common rail fuel injection system.

The accumulator furl injection system 10 consists essentially of a feed pump 14, a high-pressure pump 16, a flow rate control valve 18, a common rail 20, a pressure sensor 22, a pressure-reducing valve 24, fuel injectors 30, an electronic control unit (ECU) 40, and an electronic driving unit (EDU) 42. The accumulator fuel injection system 10, as referred to herein, is designed to supply fuel into each cylinder of, for example, an automotive four-cylinder diesel engine 50. For the sake of convenience, Fig. 1 illustrates only one signal line extending from the EDU 42 to one of the fuel injectors 30.

The feed pump 14 works to pump the fuel out of a fuel tank 12 and feed it to the high-pressure pump 16. The high-pressure pump 16 is of a typical structure in which a plunger is reciprocated following rotation of a cam of a camshaft of the engine 50 to pressurize the fuel sucked into a pressure chamber thereof. The high-pressure pump 16 is equipped with flow rate control valve 18.

The flow rate control valve 18 is disposed in an outlet of the high-pressure pump 16 and works to control a flow rate of fuel to be supplied to the common rail 20 so as to keep the pressure in the common rail 20 at a given controlled level through the high-pressure pump 16. The flow rate control valve 18 and the high-pressure pump 16 function as a fuel pressurizing/feeding mechanism.

The flow rate control valve 18 may be implemented by a solenoid-operated valve. The ECU 40 controls the duty cycle of current to be supplied to the flow rate control valve 18 to change an open position thereof. The high-pressure pump 16 is driven by the torque, as produced by the engine 50.

The common rail 20 works as a fuel accumulator which stores therein the fuel fed from the high-pressure pump 16 and keeps it at a pressure selected based on an operating conditions of the engine 50. The pressure sensor 22 works to measure the pressure of fuel at an inlet side of the common rail 20 and output a signal as indicating the pressure of fuel within the common rail 20 to the ECU 40.

When opened, the pressure-reducing valve 24 drains the fuel out of the common rail 20 into a return pipe 100 to reduce the pressure in the common rail 20. The pressure-reducing valve 24 may be implemented by a typical solenoid valve equipped with a spring, a valve member, and a coil. The spring urges the valve member to a closed position at all times. When energized, the coil produces a magnetic attraction to lift the valve member up to an open position to drain the fuel out of the common rail 20. An on-duration for which the pressure-reducing valve 24 is kept opened is controlled by the width of a pulse current supplied to the coil thereof. The greater the width of the pulse current, the longer the on-duration.

The fuel injectors 30 are installed in parallel one in each of the cylinders of the engine 50. Each of the fuel injectors 30 works to spray the fuel stored in the common rail 20 into one of the cylinders of the engine 50. Each of the fuel injectors 30 is a typical solenoid-operated valve in which the pressure of fuel in a control chamber urging a nozzle needle in a valve closing direction is regulated by the EDU 42 to control the quantity of fuel to be sprayed into the engine 50.

The ECU 40 is implemented by a typical microcomputer made up of a CPU, a ROM, a RAM, and a non-volatile memory such as a flash memory. The ECU 40 controls the energization of the flow rate control valve 18, the pressure-reducing valve 24, and the fuel injectors 30 to bring the operating condition of the engine 50 to a desired state.

The pressure-reducing valve 24 and the fuel injectors 30 are controlled indirectly by the ECU 40 through the EDU 42.

The ECU 50 samples outputs from an engine speed sensor (not shown), an accelerator position sensor (not shown) working to measure the position of an accelerator pedal (i.e., an open position of a throttle valve), a crank angle sensor (not shown) working to measure an angular position of the crankshaft of the engine 50, a temperature sensor 26 working to measure the temperature of the fuel, a speed sensor 28 working to measure the speed of revolution of the high-pressure pump 16, and the pressure sensor 22 to determine the operating conditions of the engine 50 and the fuel injection system 10.

The ECU 40 works to monitor the operating condition of the engine 50 and control the duty cycle of energization of the flow rate control valve 18, the pressure-reducing valve 24, and the fuel injectors 30 through execution of a control program, as stored in the ROM or the flash memory, so as to bring the operating condition of the engine 50 into agreement with a desired one.

Specifically, the ECU 40 stores in the flash memory a pump-discharge map representing a relation between the amount of energization of the flow rate control valve 18 and the amount of fuel to be discharged from the high-pressure pump 16. The ECU 40 controls the energization of the flow rate control valve 18 in a PID (proportional-integrsl-derivative) feedback control mode by look-up using the pump-discharge map so as to bring the pressure of fuel in the common rail 20, as sampled by the pressure sensor 22, into agreement with a target pressure.

When it is required to reduce the pressure of fuel in the common rail 20 upon deceleration of the engine 50, but it would be difficult to decrease the pressure of fuel in the common rail 20 quickly only by decreasing the amount of fuel discharged from the high-pressure pump 16, the ECU 40 instructs the ECU 42 to open the pressure-reducing valve 24 to drain the fuel in the common rail 20 to the return pipe 100.

*CORRECTION OF INJECTION CONTROL DEPENDING UPON VISCOSITY OF FUEL*

The fuel injection system 10 (i.e., the ECU 40), as described above, samples the outputs from the sensors to determine the operating condition of the engine 50 and controls the duty cycle of current to be supplied to the flow rate control valve 18, the pressure-reducing valve 24, and the fuel injectors 30 so as to bring the operating condition of the engine 50 into an optimum one.

However, a change in temperature or property of the fuel will result in a change in viscosity thereof, thus causing the amount of the fuel supplied to the engine 50 to change even when the time the fuel injectors 30 are kept opened (i.e., an injection duration) or the time at which the fuel injectors 30 are to be opened or closed is constant. This leads to a difficulty in controlling the amount of exhaust emissions from the engine 50 accurately.

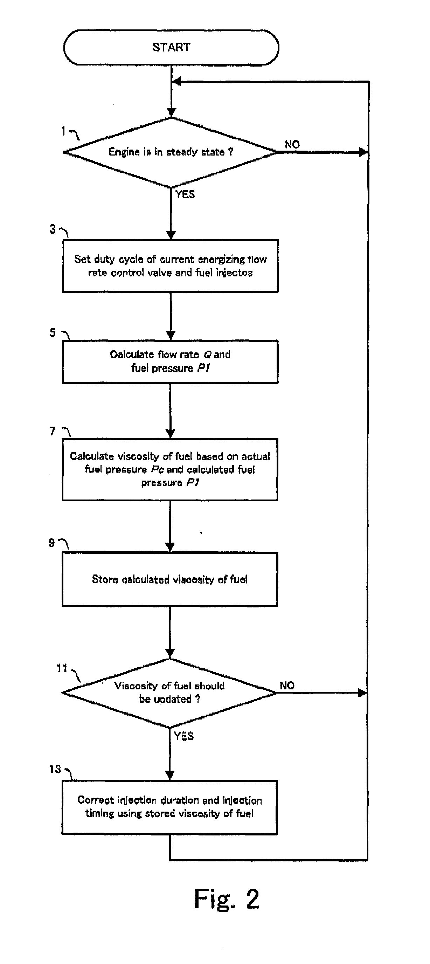

In order to alleviate the above problem, the fuel injection system 10 is designed to determine the injection duration or the time each of the fuel injectors 30 is to be opened or closed using a parameter indicating the viscosity of the fuel in a main control mode in which the fuel injectors 30 and the flow rate control valve 18 are controlled and correct fuel injection control to control the injection of fuel into the engine 50 based on the viscosity of the fuel. The correction of the fuel injection control will be described below with reference to a flowchart of Fig. 2.

When an engine start switch has been turned on to start the engine 50, the ECU 40 initiates an injection control program of Fig. 2. Upon turning off of the start switch, the ECU 40 terminates the injection control program. The correction of the fuel injection control is executed in parallel to the main control in the fuel injection system 10.

The start switch is a switch such as an ignition switch which, when turned on, places accessories (i.e., electrical equipment) mounted in an automotive vehicle in an on-state.

After entering the program, the routine proceeds to step 1 wherein it is determined whether the engine 50 is now in a steady state or not. Specifically, it is determined whether at least one of three conditions (*a*), (*b*), and (*c*), as described below, is met or not.

(*a*) The speed of or required load on the engine 50 is fixed, and a controlled operating condition of the fuel injectors 30 is kept constant (i.e., the duty cycle of the current supplied to the fuel injectors 30 is fixed).

(*b*) The pressurized fuel is being fed to the common rail 20, and a controlled operating condition of the flow rate control valve 18 is kept constant (i.e., the duty cycle of the current supplied to the flow rate control valve 18 is fixed) during running of the engine 50.

(*c*) The pressurized fuel is being fed to the common rail 20, and the flow rate control valve 18 is closed during running of the engine 50.

If a NO answer is obtained meaning that any of the above conditions (*a*), (*b*), and (*c*) is not met, the routine repeats step 1. Alternatively, if a YES answer is obtained meaning that the engine 1 is in the steady state, then the routine proceeds to step 3 wherein the duty cycle of current to be supplied to each of the flow rate control valve 18 and the fuel injectors 30 is fixed to a constant value selected to calculate the viscosity of the fuel.

The duty cycle (which will be referred to below as a control-mode duty cycle) of current supplied to the flow rate control valve 18, as referred to in the above condition (b), is determined in the main control by the ECU 40 based on the operating condition of the engine 50, while the duty cycles (which will be referred to below as viscosity-calculation duty cycles) of current supplied to the flow rate control valve 18 and each of the fuel injectors 30 are given by values stored in the ROM or the flash memory of the ECU 40 for use in calculating the viscosity of the fuel. The duty cycle of current supplied to the fuel injectors 30 will also be referred to below as the control-mode duty cycle.

The control-mode duty cycles and the viscosity-calculation duty cycles may be equal to each other depending upon the operating condition of the engine 50. The viscosity-calculation duty cycles are, as described above, pre-selected to be suitable for calculating the viscosity of the fuel and stored in the ECU 40.

When the viscosity-calculation duty cycles are different greatly from the control-mode duty cycles, it may result in adverse effects on the operation of the engine 50, however, the time for which the viscosity-calculation duty cycles are used is selected to be short enough to ensure the stability of operation of the engine 50.

After the duty cycles of current to be supplied to the flow rate control valve 18 and the fuel injectors 30 are set to the viscosity-calculation duty cycles in step 3, the routine proceeds to step 5 wherein the output of the temperature sensor 26 indicating the temperature of the fuel, the output of the speed sensor 28 indicating the speed of revolution of the high-pressure pump 16, and the duty cycle for the flow rate control valve 18 are sampled to calculate the flow rate $Q$ of fuel to be delivered to the common rail 20, in other words, the flow rate $Q$ of fuel to flow through the path extending from the outlet of the flow rate control valve 18 to the common rail 20 and the pressure $P1$ of fuel at or downstream of the outlet of the flow rate control valve 18 based on the sampled values.

After the outputs of the temperature sensor 26 and the speed sensor 28, and the duty cycle for the flow rate control valve 18 are sampled to derive the flow rate $Q$ of fuel, the duty cycles for the flow rate control valve 18 and the fuel injectors 30 are returned to the control-mode duty cycles, respectively. In other words, the flow rate control valve 18 and the fuel injectors 30 are placed in the main control mode.

After step 5, the routine proceeds to step 9 wherein the viscosity of the fuel is determined according to an equation below using the flow rate $Q$ of fuel and the pressure $P1$ of fuel at the outlet of the flow rate control valve 18, as determined in step 5, and the pressure $Pc$ of fuel flowing downstream of the outlet of the flow rate control valve 18, as measured by the pressure sensor 22.

$$Q = \pi d4 \, \Delta P \,/\, 128 L \mu$$

where $Q$ is the flow rate of fuel, as determined in step 5, d is the inner diameter of the pipe extending from the outlet of the flow rate control valve 18 to the pressure sensor 22, $\Delta P$ is $P1 - Pc$, L is the length of the pipe extending between the outlet of the flow rate control valve 18 and the pressure sensor 22, and $\mu$ is the viscosity of the fuel. Note that the above equation is used in the case where the pipe extending between the flow rate control valve 18 and the pressure sensor 22 is circular in cross section, and in the case where the pipe is not circular in cross section, the viscosity of the fuel may be calculated according to another known equation, and that the pipe between the flow rate control valve 18 and the pressure sensor 22, as referred to above, is what is defined as approximating a fuel flow path extending from the high-pressure pump 16 to the inlet of each of the fuel injectors 30.

After the viscosity of the fuel is derived in step 7, the routine proceeds to step 9 wherein the viscosity of the fuel is stored in a given address location of the RAM of the ECU 40.

The routine proceeds to step 11 wherein it is determined whether the viscosity of the fuel, as stored in step 9, should be employed in the main control mode or not, that is, whether a viscosity-updating condition in which the viscosity of the fuel should be updated is met or not. Specifically, it is determined whether the fuel tank 12 has been refueled or not. When the fuel tank 12 is determined to have been refueled, the viscosity-updating condition is determined to have been satisfied. Alternatively, when the fuel tank 12 is determined not to have been refueled, the routine returns back to step 1.

The determination of whether the fuel tank 12 has been refueled or not is made by comparing between the amounts of fuel in the fuel tank 12 before and after the start switch is turned on. When the amount of the fuel in the fuel tank 12, as measured upon turning on of the start switch, has been greater than that, as measured when the start switch is in the off-state, the viscosity-updating condition is determined to have been met. Alternatively, when the amount of the fuel in the fuel tank 12, as measured when the start switch is in the off-state, is greater than or equal to that, as measured upon turning on of the start switch, the viscosity-updating condition is determined not to have been met.

If a YES answer is obtained in step 11 meaning that the fuel tank 12 has been refueled, the routine proceeds to step 13 wherein the viscosity of the fuel is read out of the RAM and used to correct the quantity of fuel each of the fuel injectors 30 is instructed to spray (i.e., the injection duration) and the injection timing of each of the fuel injectors 30 (i.e., the time when the fuel injector 30 should start to spray the fuel and/or the time when the fuel injector 30 should terminate the spraying of the fuel) which have been determined in the main control mode for bringing the quantity of fuel actually sprayed into the engine 50 into agreement with a desired one. Specifically, when the viscosity of the fuel is determined to have been changed, the ECU 40 corrects a target quantity of the fuel to be sprayed into the engine 50 (i.e., the duty cycle of a current pulse to energize each of the fuel injectors 30) and the time at which each of the fuel injectors 30 should be opened and/or closed (i.e., rising and/or falling of the current pulse) which have already been determined based on the operating condition of the engine 50 in the main control mode so as to compensate for an error in quantity of fuel actually sprayed form each of the fuel injectors which arises from a change in viscosity of the fuel. The ECU 40 may also correct the duty cycle of a current pulse to energize the flow rate control valve 18 based on the viscosity of the fuel.

Alternatively, if a NO answer is obtained in step 11 meaning that the fuel tank 12 is determined not to have been refueled, in other words, the viscosity of the fuel is determined to remain unchanged, the routine returns back to step 1 without updating the viscosity of the fuel for use in the main control mode.

*BENEFICIAL FEATURES OF FUEL INJECTION SYSTEM*

The ECU 40 uses the viscosity of the fuel, as calculated in step 5 of Fig. 2 based on the flow rate $Q$ of the fuel, the pressure $P1$ of the fuel at the outlet of the flow rate control valve 18, and the pressure $Pc$ of the fuel, as measured by the pressure sensor 22, to correct the viscosity of the fuel having been ever employed in the main control mode, thereby ensuring the accuracy in supplying a desired quantity of fuel to the engine 50.

The output from the pressure sensor 22 which is commonly installed to measure the pressure of the fuel in the common rail 20 for use in the main control mode is employed in calculating the viscosity of the fuel, thus enabling the quantity of fuel to be sprayed into the engine 50 to be controlled accurately without increasing the manufacturing costs of the fuel injection system 10.

The flow rate $Q$ of the fuel supplied to the common rail 20 and the pressure $P1$ of the fuel at the outlet of the flow rate control valve 18 are determined based on the viscosity-calculation duty cycle of current set to energize the flow rate control valve 18 for calculating the viscosity of the fuel, thus enabling the viscosity of the fuel to be derived without having to use an additional fuel pressure sensor and a flow rate sensor.

The fuel injection system 10 of this embodiment is, therefore, works to supply the fuel to the engine 50 without increasing the manufacturing costs thereof greatly.

The viscosity of fuel is one of parameters representing physical properties of the fuel. Different fuels, therefore, have different viscosities. When having the same physical properties, the fuels show the same viscosity as long as the temperatures of the fuels are the same.

The fuel injection system 10 is designed to use the most recently calculated viscosity of the fuel in correcting or updating the viscosity of the fuel having been ever used in the main control mode when the vehicle is determined as having been refueled, thus minimizing the number of times the viscosity of the fuel used in the main control mode is updated.

The ECU 40 calculates the viscosity of the fuel when the operation of the engine 50 is in the steady state, that is, when at least one of the conditions (*a*), (*b*), and (*c*), as described above, is met, thus ensuring the accuracy in determining the viscosity of the fuel.

The ECU 40 enters a viscosity-calculating mode to calculate the viscosity of the fuel when the fuel is being delivered to the common rail 20, in other words, when a variation in pressure (i.e., a pressure pulsation) of the fuel flowing through the fuel flow path between the high-pressure pump 16 and the fuel injectors 30 is low, thus ensuring the accuracy in calculating the viscosity of the fuel.

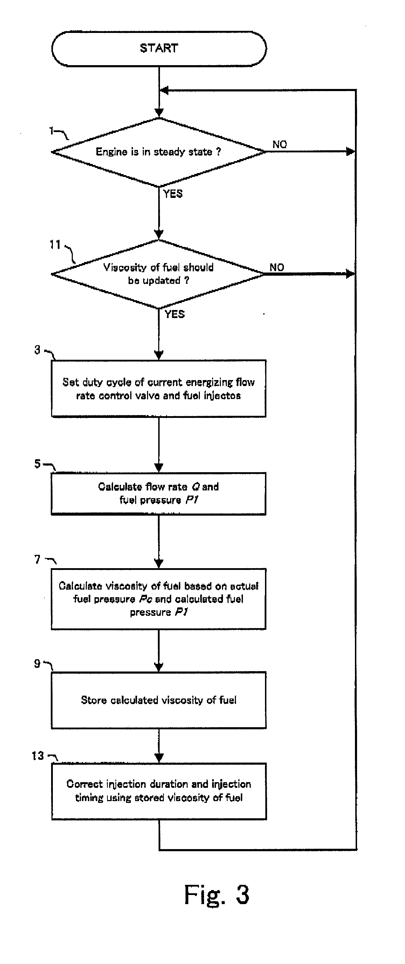

Fig. 3 is a flowchart of an injection control program according to the second embodiment of the invention which is different from the one of Fig. 2 only in that immediately after the engine 50 is determined as being in the steady state, it is determined in step 11 whether the viscosity-updating condition is met or not. The same step numbers, as employed in Fig. 2, refer to the same operations and explanation thereof in detail will be omitted here.

While the present invention has been disclosed in terms of the preferred embodiments in order to facilitate better understanding thereof, it should be appreciated that the invention can be embodied in various ways without departing from the principle of the invention. Therefore, the invention should be understood to include all possible embodiments and modifications to the shown embodiment which can be embodied without departing from the principle of the invention as set forth in the appended claims.

The invention may also be employed with an exhaust emission control device which is designed to spray a reducing agent into an exhaust pipe of an internal combustion engine such as an automotive diesel engine to reduce nitrogen oxides (NOx) contained in the exhaust gas.

The invention may also be employed with a gasoline engine fuel injection system.

When it is required to calculate the viscosity of the fuel, the ECU 40 determines a drop in pressure of the fuel (i.e., $\Delta P$) flowing upstream of the common rail 20 within the fuel flow path extending from the outlet of the flow rate control valve 18 and the spray holes of the fuel injectors 30, however, may alternatively determine such a pressure drop at another location downstream of the common rail 20. For instance, a pressure sensor may be installed in a joint of the fuel pipe of one of the fuel injectors 30 with the common rail 20 to measure the pressure drop Δ. The pressures *P1* and Pc of the fuel, as used to determine the pressure drop Δ*P*, may be pressures of the fuel at any predetermined places from the flow rate control valve 18 to the fuel injectors 30.

The ECU 40 calculates the flow rate *Q* of fuel supplied to the common rail 20 and the pressure *P1* of fuel at the outlet of the flow rate control valve 18 based on the temperature of the fuel, the speed of revolution of the high-pressure pump 16, and the duty cycle of current energizing the flow rate control valve 18, however, may alternatively be designed to measure the flow rate *Q* and the pressure *P1* directly using sensors.

The ECU 40 calculates the viscosity of the fuel when the engine 50 is in the steady state, however, may alternatively be designed to calculate it during the normal operation of the engine 50.

The ECU 40 updates the viscosity of the fuel for use in the main control mode to determine the target quantity of fuel to be sprayed form the fuel injectors 30 and the injection timing of the fuel injectors 30 when the fuel tank 12 is determined to have been refueled, however, may alternatively be designed to update the viscosity of the fuel each time it is calculated or when it is determined as being different from that having been ever used in the main control mode.

A liquid supply system which may be designed as a fuel injection system for automotive vehicles is provided. The liquid supply system works to control operations of a liquid injector and a pump. The liquid supply system determines the viscosity of the liquid, as delivered from the pump, and corrects the operation of the injector so as to compensate for an error which will arise from a change in viscosity of the liquid, thereby ensuring the accuracy in supplying the liquid.

**Claims**

1.  A liquid supply system comprising:

    a pressurizing/feeding mechanism working to pressurize and feed liquid;
    an injector working to spray the liquid, as fed from said pressurizing/feeding mechanism, through a spray hole;
    a flow path which extends from an outlet of said pressurizing/ feeding mechanism and the spray hole of said injector and through which the liquid flows; and
    a controller working to perform a control operation to control an operation of said injector, said controller also performing a first pressure-determining function, a second pressure-determining function, a flow rate-determining function, a viscosity-calculating function, and a control-correcting function, the first pressure-determining function being to determine a first pressure that is a pressure of the liquid flowing through a portion of said flow path, the second pressure-determining function being to determine a second pressure that is a pressure of the liquid flowing downstream of the portion of the flow path where the first pressure is determined, the flow rate-determining function being to determine a flow rate of the liquid flowing through said flow path, the viscosity-calculating function being to calculate a viscosity of the liquid supplied to said injector based on a difference between the first pressure and the second pressure and the flow rate, as determined by the flow rate-determining function, the control-correcting function being to correct the control operation to control the operation of said injector based on the viscosity of the liquid, as calculated by the viscosity-calculating function.

2.  A liquid supply system as set forth in claim 1, further comprising a common rail in which the liquid, as delivered from said pressurizing/feeding mechanism, is stored and to which said injector is connected, and wherein the first pressure is the pressure of the liquid flowing upstream of said common rail within said flow path, and the second pressure is the pressure of the liquid in said common rail.

3.  A liquid supply system as set forth in claim 1 or 2, wherein the first pressure-determining function calculates the first pressure based on an operating condition of said pressurizing/feeding mechanism, and wherein the flow rate-determining function calculates the flow rate of the liquid based on the operating condition of said pressurizing/feeding mechanism.

4.  A liquid supply system as set forth in any one of claims 1 to 3, further comprising a liquid tank in which the liquid to be pressurized by said pressurizing/feeding mechanism is stored, and wherein said controller also works to determine whether the liquid tank has been refilled with the liquid or not, when the liquid tank is determined to have been refilled, the control-correcting function correcting the control operation based on the viscosity of the liquid, as calculated by the viscosity-calculating function.

5.  A liquid supply system as set forth in any one of claims 1 to 4, wherein said controller controls said pressurizing/feeding mechanism to keep an operation of said pressurizing/ feeding mechanism constant when the viscosity-calculating function calculates the viscosity of the liquid.

6.  A liquid supply system as set forth in any one of claims 1 to 5, wherein said controller controls said injector to keep the operation of said injector constant when the viscosity-calculating function calculates the viscosity of the liquid.

7. A liquid supply system as set forth in any one of claims 1 to 6, wherein when said pressurizing/feeding mechanism is feeding the liquid through said flow path, the viscosity-calculating function calculates the viscosity of the liquid.

8. A liquid supply system as set forth in any one of claims 1 to 7, wherein the liquid is fuel for a diesel engine, and wherein said injector works to inject the fuel into a combustion chamber of the diesel engine.

Fig. 1

Fig. 2

START

1 — Engine is in steady state ? — NO

YES

11 — Viscosity of fuel should be updated ? — NO

YES

3 — Set duty cycle of current energizing flow rate control valve and fuel injectos

5 — Calculate flow rate $Q$ and fuel pressure $P1$

7 — Calculate viscosity of fuel based on actual fuel pressure $Pc$ and calculated fuel pressure $P1$

9 — Store calculated viscosity of fuel

13 — Correct injection duration and injection timing using stored viscosity of fuel

Fig. 3

**REFERENCES CITED IN THE DESCRIPTION**

**Patent documents cited in the description**

- JP 2001182638 A